# EUROPÄISCHE PATENTANMELDUNG

(11) **EP 3 636 891 A1**
(43) Veröffentlichungstag der Anmeldung: **15.04.2020**
(21) Anmeldenummer: 18465601.5
(22) Anmeldetag: 11.10.2018
(51) Int. Cl.: F01N 9/00, F01N 13/10, F02B 33/40, F02B 35/02

(54) **ABGASEINRICHTUNG FÜR EINE BRENNKRAFTMASCHINE**

(71) Anmelder: Continental Automotive GmbH, 30165 Hannover (DE)
(72) Erfinder: Vornicu, Vlad, 707317 Valea Adanca (RO); Crismaru, Ionut, 700080 Iasi (RO)

(57) **Zusammenfassung**

Bei einer Abgaseinrichtung (2) für eine Brennkraftmaschine (1) ist ein Gebläse (7) in einem Abgaskanal (10) angeordnet. Eine Saugseite des Gebläses (7) weist zu der Brennkraftmaschine (1). Das Gebläse (7) verringert den Druck in einem Anschlussstück (4) des Abgaskanals (10) an der Brennkraftmaschine (1). Hierdurch wird verbleibendes Restabgas in der Brennkraftmaschine (1) besonders gering gehalten.

## Beschreibung

Die Erfindung betrifft eine Abgaseinrichtung für eine Brennkraftmaschine mit einem Abgaskanal und mit einem zum Anschluss an die Brennkraftmaschine vorgesehenen Anschlussstück des Abgaskanals.

Aus der Praxis bekannte Abgaseinrichtungen haben einen Krümmer zum Anschluss an die Brennkraftmaschine mit einem ersten Teil des Abgaskanals und ein sich daran anschließendes Abgasrohr mit einem weiteren Teil des Abgaskanals. In dem Abgasrohr sind weitere Bauteile wie ein Katalysator oder ein Schalldämpfer angeordnet. Das Rohr, der Schalldämpfer und der Katalysator setzen dem von der Brennkraftmaschine ausgestoßenen Abgas einen Widerstand entgegen. Weiterhin sind Abgaseinrichtungen mit einem Turbolader bekannt, welche die kinetische Energie des Abgases nutzen. Auch ein solcher Turbolader setzt ebenfalls dem von der Brennkraftmaschine ausgestoßenen Abgas einen Widerstand entgegen.

Nachteilig bei den bekannten Abgaseinrichtungen ist, dass durch den Widerstand das Abgas nicht vollständig aus Zylindern der Brennkraftmaschine ausgestoßen werden kann. Hierdurch verbleibt ein Restabgas im Zylinder. Das Restabgas verringert die anschließende Befüllung mit Frischgas. Damit steht der Brennkraftmaschine nur ein Teilvolumen des Zylinders für die Verbrennung zur Verfügung. Weiterhin führt das in dem Zylinder verbleibende Restgas zu einem Anstieg von Emissionen im Abgas.

Der Erfindung liegt das Problem zugrunde, eine Abgaseinrichtung der eingangs genannten Art so weiter zu bilden, dass sie den Verbleib von Restgas im Zylinder besonders gering hält. Dieses Problem wird erfindungsgemäß gelöst durch Mittel zur Verringerung des Drucks in dem Anschlussstück des Abgaskanals.

Durch diese Gestaltung wird der Widerstand, den die Abgaseinrichtung der Brennkraftmaschine beim Ausstoßen der Abgase entgegensetzt, besonders klein gehalten. Dies verringert den zum Ausstoßen der Abgase aus den Zylindern erforderlichen Energieaufwand der Brennkraftmaschine. Weiterhin verbleiben weniger Restgase in dem Zylinder der Brennkraftmaschine, so dass sich beim erneuten Ansaugen der Füllungsgrad mit Frischgas des Zylinders erhöht. Dies trägt zur Verringerung der Abgase der Brennkraftmaschine bei.

Die Mittel zur Verringerung des Drucks gestalten sich gemäß einer anderen vorteilhaften Weiterbildung der Erfindung konstruktiv besonders einfach, wenn in dem Abgaskanal ein Gebläse angeordnet ist, wobei eine Unterdruckseite des Gebläses dem Anschlussstück zugewandt ist. Durch diese Gestaltung wird das Ausstoßen des Abgases von der Brennkraftmaschine aktiv von dem Gebläse unterstützt. Bei einer entsprechenden Dimensionierung des Gebläses lässt sich ein besonders geringer Druck in dem Anschlussstück einstellen, und damit die Restgase absaugen. Das Gebläse unterstützt die Brennkraftmaschine bei ihrem das Abgas ausstoßenden Arbeitstakt.

Der Druck am Anschluss der Brennkraftmaschine am Abgaskanal lässt sich gemäß einer anderen vorteilhaften Weiterbildung der Erfindung einfach einstellen, wenn das Gebläse einen elektrischen Antrieb aufweist.

Der Druck am Anschluss der Brennkraftmaschine lässt sich gemäß einer anderen vorteilhaften Weiterbildung der Erfindung besonders genau regeln, wenn die Mittel zur Verringerung des Drucks in dem Anschlussstück des Abgaskanals mit einer elektronischen Steuereinrichtung verbunden sind. Im einfachsten Fall kann die Steuereinrichtung den elektrischen Antrieb des Gebläses ansteuern. Jedoch kann die Steuereinrichtung auch eine vor den Mitteln zur Verringerung des Drucks angeordnete Drosselklappe oder eine Klappe in einem Bypasskanal ansteuern.

Eine genaue Bedarfsregelung des Druckes am Anschluss der Brennkraftmaschine am Abgaskanal lässt sich gemäß einer anderen vorteilhaften Weiterbildung der Erfindung einfach erreichen, wenn die Steuereinrichtung mit Sensoren zur Erfassung der Drehzahl der Brennkraftmaschine, der Temperatur und dem Druck im Anschlussstück verbunden ist. Vorzugsweise ist die Steuereinrichtung des Gebläses Teil eines ohnehin vorhandenen Steuergerätes der Brennkraftmaschine.

Bei einer Brennkraftmaschine mit mehreren Zylindern, könnten beispielsweise mehrere Gebläse zur Verringerung des Drucks an jedem der Zylinder angeordnet sein. Dies führt jedoch zu einem sehr hohen baulichen Aufwand der Abgaseinrichtung. Die Abgaseinrichtung gestaltet sich gemäß einer anderen vorteilhaften Weiterbildung der Erfindung konstruktiv besonders einfach, wenn die Mittel zur Verringerung des Drucks in der Verbindung mehrerer Abgaskrümmer mit einem gemeinsamen Abgasrohr angeordnet sind. Dennoch sind hierdurch die Mittel zur Verringerung des Drucks besonders nahe an den Zylindern der Brennkraftmaschine angeordnet. Durch diese Gestaltung wird der Druck in den Abgaskrümmern verringert.

Die Führung des Abgases durch das Gebläse gestaltet sich gemäß einer anderen vorteilhaften Weiterbildung der Erfindung besonders einfach, wenn ein Kranz mehrerer Kanäle radial um den elektrischen Antrieb des Gebläses herum angeordnet sind.

Die Abgaseinrichtung gestaltet sich gemäß einer anderen vorteilhaften Weiterbildung der Erfindung konstruktiv besonders einfach, wenn das Anschlussstück einen Flansch zur Montage an der Brennkraftmaschine hat.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: schematisch einen Teilbereich eines Kraftfahrzeuges mit einer Brennkraftmaschine und einer Abgaseinrichtung,
- Fig.2: vergrößert einen Teilbereich der Abgaseinrichtung aus Figur 1 in einem Teilschnitt,
- Fig.3: einen Längsschnitt durch ein Gebläse der Abgaseinrichtung aus Figur 1,
- Fig.4: eine perspektivische Darstellung des Gebläses aus Figur 4 mit teilweise geöffneten Gehäuse,
- Fig.5: ein Druck- Volumenstrom Diagramm einer Brennkraftmaschine.

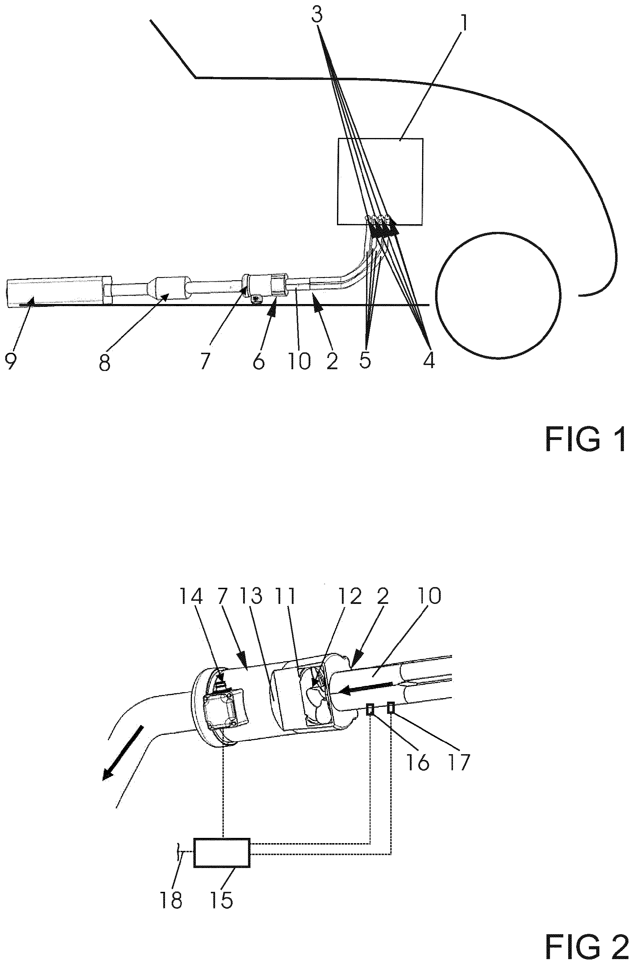

Figur 1 zeigt einen in Fahrtrichtung weisenden Teilbereich eines Kraftfahrzeuges mit einer Brennkraftmaschine 1 und eine an der Brennkraftmaschine 1 angeschlossene Abgaseinrichtung 2. Die Abgaseinrichtung 2 hat in dem Ausführungsbeispiel vier Flansche 3 aufweisende Anschlussstücke 4 zum Anschluss an vier nicht dargestellten Zylindern der Brennkraftmaschine 1. Die Anschlussstücke 4 sind Teil von Krümmern 5 welche das Abgas einzeln von den Zylindern der Brennkraftmaschine 1 weg bis zu einem Verbindungsstück 6 mit einem Gebläse 7 führen. In Strömungsrichtung gesehen hinter dem Gebläse 7 sind ein Katalysator 8 und ein Schalldämpfer 9 angeordnet. Ein Abgaskanal 10 erstreckt sich von der Brennkraftmaschine 1 durch die Krümmer 5, das Gebläse 7, den Katalysator 8 und den Schalldämpfer 9 in die Umwelt.

Das Gebläse 7 ist mit seiner Saugseite der Brennkraftmaschine 1 zugewandt und verringert den Druck im Anschlussstück 4. Das Abgas wird damit durch das Gebläse 7 von dem Anschlussstück 4 abgesaugt und aktiv zu dem Katalysator 8 und dem Schalldämpfer 9 gefördert.

Figur 2 zeigt vergrößert einen Teilbereich der Abgaseinrichtung 2 mit dem Gebläse 7. Ein Gehäuse 11 des Gebläses 7 ist teilweise aufgeschnitten dargestellt, um Leitschaufeln 12 darzustellen. Die Leitschaufeln 12 werden von einem Elektromotor 13 angetrieben. Der Elektromotor 13 wird über einen elektrischen Anschluss 14 mit elektrischem Strom versorgt. Eine elektronische Steuereinrichtung 15 ist mit dem elektrischen Anschluss 14 und mit Sensoren 16, 17 im Abgaskanal 10 verbunden. Weiterhin hat die elektronische Steuereinrichtung 15 eine Verbindung 18 mit einer nicht dargestellten Motorsteuerung der Brennkraftmaschine 1 aus Figur 1. Über die Verbindung 18 mit der Motorsteuerung erhält die elektronische Steuereinrichtung 15 Daten der der Brennkraftmaschine 1 wie beispielsweise die Drehzahl. Die Sensoren 16, 17 liefern der elektronischen Steuereinrichtung 15 Daten wie Temperatur und Druck im Abgaskanal 10.

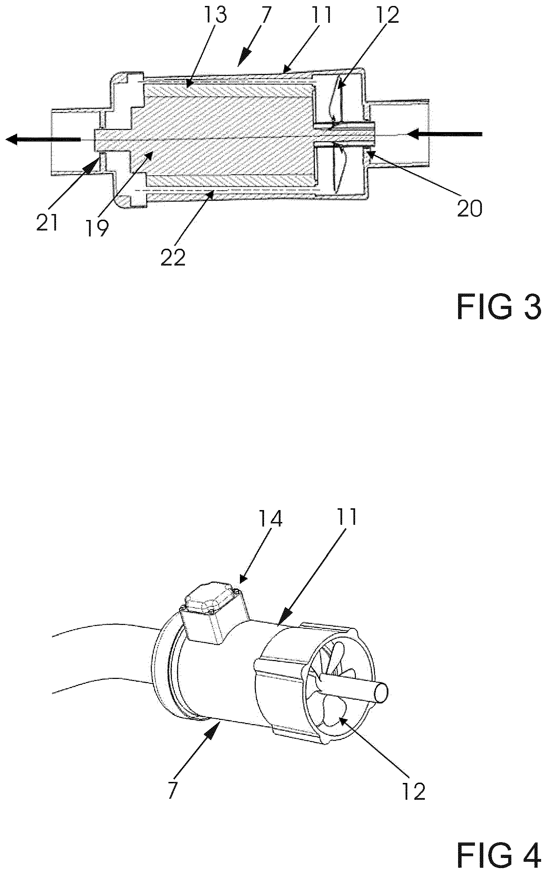

Figur 3 zeigt einen Längsschnitt durch das Gebläse 11 mit den Leitschaufeln 12 und dem Elektromotor 13. Die Leitschaufeln 12 und der Elektromotor 13 sind auf einer gemeinsamem Welle 19 angeordnet und an zwei Lagerungen 20, 21 im Gehäuse 11 gelagert. Radial außerhalb des Elektromotors 13 ist ein Kranz Kanäle 22 zur Führung des Abgases angeordnet. Die Strömung des durch das Gebläse 7 geführten Abgases ist in Figur 3 mit Pfeilen gekennzeichnet.

Figur 4 zeigt zur Verdeutlichung das Gebläse 7 aus Figur 3 in einer perspektivischen Darstellung mit teilweise geöffnetem Gehäuse 11.

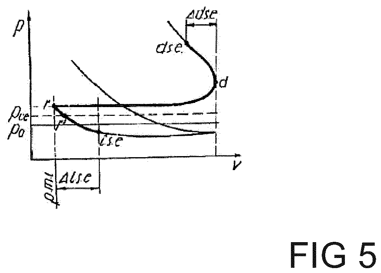

Figur 5 zeigt ein Druck- Volumenstrom Diagramm eines Viertaktzylinders der Brennkraftmaschine 1. Mit ise ist das Schließen eines Auslassventils und mit dse das Öffnen des Auslassventils gekennzeichnet. Durch das Gebläse 7 wird der Druck in dem Anschlussstück 4 des Abgaskanals 10 von einem hohen Wert auf einen niedrigen Wert gesenkt und das Restvolumen in den Zylindern der Brennkraftmaschine 1 nach dem Schließen des Auslassventils verringert.

## Patentansprüche

1. Abgaseinrichtung (2) für eine Brennkraftmaschine (1) mit einem Abgaskanal (10) und mit einem zum Anschluss an die Brennkraftmaschine (1) vorgesehenen Anschlussstück (4) des Abgaskanals (10), **gekennzeichnet durch** Mittel zur Verringerung des Drucks in dem Anschlussstück (4) des Abgaskanals (10).

2. Abgaseinrichtung nach Anspruch 1, **dadurch gekennzeichnet, dass** in dem Abgaskanal (10) ein Gebläse (7) angeordnet ist, wobei eine Unterdruckseite des Gebläses (7) dem Anschlussstück (4) zugewandt ist.

3. Abgaseinrichtung nach Anspruch 1 oder 2, **dadurch gekennzeichnet, dass** das Gebläse (7) einen elektrischen Antrieb aufweist.

4. Abgaseinrichtung nach zumindest einem der Ansprüche 1 bis 3, **dadurch gekennzeichnet, dass** die Mittel zur Verringerung des Drucks in dem Anschlussstück (4) des Abgaskanals (10) mit einer elektronischen Steuereinrichtung (15) verbunden sind.

5. Abgaseinrichtung nach Anspruch 4, **dadurch gekennzeichnet, dass** die Steuereinrichtung (15) mit Sensoren (16, 17) zur Erfassung der Drehzahl der Brennkraftmaschine (1), der Temperatur und dem Druck im Anschlussstück (4) verbunden ist.

6. Abgaseinrichtung nach zumindest einem der Ansprüche 1 bis 5, **dadurch gekennzeichnet, dass** die Mittel zur Verringerung des Drucks in der Verbindung mehrerer Abgaskrümmer (5) mit einem gemeinsamen Abgasrohr angeordnet sind.

7. Abgaseinrichtung nach zumindest einem der Ansprüche 3 bis 6, **dadurch gekennzeichnet, dass** ein Kranz mehrerer Kanäle (22) radial um den elektrischen Antrieb des Gebläses (7) herum angeorndet sind.

8. Abgaseinrichtung nach zumindest einem der Ansprüche 1 bis 7, **dadurch gekennzeichnet, dass** das Anschlussstück (4) einen Flansch (3) zur Montage an der Brennkraftmaschine (1) hat.
